# EUROPÄISCHE PATENTANMELDUNG

(11) **EP 4 364 576 A1**
(43) Veröffentlichungstag der Anmeldung: **08.05.2024**
(21) Anmeldenummer: 23208098.6
(22) Anmeldetag: 07.11.2023
(51) Int. Cl.: A23F 5/44, A23L 5/10, A23L 11/60

(54) **RÖSTVERFAHREN FÜR HÜLSENFRÜCHTE**

(30) Priorität: 07.11.2022 DE 102022129328
(71) Anmelder: Senne, Andreas, 31553 Sachsenhagen (DE)
(72) Erfinder: Senne, Andreas, 31553 Sachsenhagen (DE)
(74) Vertreter: Kröncke, Rolf

(57) **Zusammenfassung**

Die vorliegende Erfindung betrifft ein Verfahren zur Röstung von Hülsenfrüchten. Hierbei werden die Hülsenfrüchte erhitzt und mindestens ein Fett zu den Hülsenfrüchten gegeben. Darüber hinaus betrifft die Erfindung Hülsenfrüchte, die nach den beschriebenen Verfahren erhalten werden können. Weiter betrifft die Erfindung die Herstellung eines kaffeeähnlichen Getränks, welches zumindest teilweise ein Extrakt aus den beschriebenen Hülsenfrüchten enthält sowie ein Getränk, welches zumindest teilweise ein Extrakt aus den erfindungsgemäßen Hülsenfrüchten enthält.

## Beschreibung

Die vorliegende Erfindung betrifft ein Verfahren zur Röstung von Hülsenfrüchten. Hierbei werden die Hülsenfrüchte erhitzt und mindestens ein Fett zu den Hülsenfrüchten gegeben. Darüber hinaus betrifft die Erfindung Hülsenfrüchte, die nach den beschriebenen Verfahren erhalten werden können. Weiter betrifft die Erfindung die Herstellung eines kaffeeähnlichen Getränks, welches zumindest teilweise ein Extrakt aus den beschriebenen Hülsenfrüchten enthält sowie ein Getränk, welches zumindest teilweise ein Extrakt aus den erfindungsgemäßen Hülsenfrüchten enthält.

### Stand der Technik

Es sind Röstverfahren für Kaffeebohnen bekannt. Bei der Röstung von Kaffeebohnen wird häufig zwischen einem industriellen Heißluftverfahren mit heißer Luft bis zu 600°C und einer langsameren, schonenderen Trommelröstung bei Temperaturen um 200°C unterschieden. In beiden Fällen werden die Kaffeebohnen für eine gewisse Zeit erhitzt und dabei der Umgebungsluft ausgesetzt. Aus den gerösteten Kaffeebohnen kann durch Mahlen der Bohnen und Extraktion mit Wasser, beispielsweise heißem Wasser, ein Kaffeebohnen-Extrakt gewonnen werden.

Es ist außerdem bekannt, dass der Geschmack des Kaffees beispielsweise von der Hitze während der Röstung und der Dauer der Röstung abhängt. Man unterscheidet üblicherweise mehrere Röstgrade, die von den Parametern der Röstung abhängig sind.

Neben Kaffeebohnen sind auch weitere Pflanzenbestandteile bekannt, aus denen durch Extraktion mit Wasser ein kaffeeähnliches Extrakt gewonnen werden kann. Weitere kaffeeähnliche Getränke sind beispielsweise Eichelkaffee, Malzkaffee oder Gerstenkaffee und Zichorienkaffee. Darüber hinaus ist ein kaffeeähnliches Getränk aus Süßlupinen bekannt. Zu diesem Zweck kann die Süßlupine geröstet werden.

Ein Herstellungsverfahren für ein Kaffeesurrogat aus gerösteten Hülsenfrüchten ist beispielsweise aus der DE19934493A1 bekannt. Hierbei werden getrocknete Kerne der Süßlupine von der sie umgebenden Haut getrennt und die so erhaltenen Kerne einem üblichen Röstverfahren gefolgt von einem Mahlvorgang unterzogen. Die gemahlene Süßlupine wird dann überbrüht oder aufgekocht. Der dadurch erhaltene Lupinenkaffee ist koffeinfrei und glutenfrei.

US 2022/0183340 A1 beschreibt ein Frittierverfahren von Nahrungsmitteln einschließlich grünen Kaffeebohnen mit tierischen und pflanzlichen Bestandteilen. Die Zugabe von Zusatzstoffen zum Kaffee und Kaffeeersatz umfasst die Zugabe von Pflanzenauszügen, Speisefetten, Salze, Zucker etc. Diese Zusatzstoffe werden u. a. zur Färbung bei der Röstung hinzugefügt.

Beim Rösten der Hülsenfrüchte entstehen jedoch Geschmacksstoffe, die Testpersonen als unangenehm beschrieben haben.

### Beschreibung der Erfindung

Aufgabe der vorliegenden Erfindung ist ein verbessertes Röstverfahren für Hülsenfrüchte, das zu einer bekömmlicheren Aromenkomposition der Hülsenfrüchte und dem damit erhältlichen kaffeeähnlichen Getränk führt. Die Aufgabe wird durch ein Röstverfahren nach Anspruch 1 gelöst. Die vorliegende Erfindung betrifft in einem ersten Aspekt ein Röstverfahren für Hülsenfrüchte, bei dem die Hülsenfrüchte zum Rösten erhitzt werden und mindestens ein Fett zu den Hülsenfrüchten zugegeben wird. Das Extrakt der daraus erhaltenen Hülsenfrüchte wird daraufhin von Testpersonen als bekömmlicher und wohlschmeckender wahrgenommen. Es zeigte sich, dass bei dem Rösten ein zumindest teilweises Vorliegen von Fett, für Geschmack eines daraus hergestellten Nahrungsmittels, insbesondere von Kaffeeersatz, vorteilhaft ist.

Eine mögliche Erklärung hierfür könnte sein, dass durch die Zugabe des Fetts während der Röstung weniger der als störend empfundenen Aromen, beispielweise Bitterstoffe, entstehen. Das zugegebene Fett könnte auch dazu führen, dass flüchtige Aromen, die im konventionellen Verfahren bei der Röstung der Hülsenfrüchte verloren gehen würden, gebunden werden können und in Bohnen verbleiben. Durch das zugegebene Fett könnten fettlösliche Aromen zu einem größeren Teil in den Extrakt übergehen und somit möglicherweise andere Aromen überdecken.

Die erfindungsgemäß gerösteten Hülsenfrüchte enthalten ein breiteres Aromenspektrum. Testpersonen nahmen einen Extrakt aus mit Fett gerösteten Hülsenfrüchten wohlschmeckender und vollmundiger wahr, als einen Extrakt aus ohne Zugabe von Fett gerösteten Hülsenfrüchten. Zusätzlich könnten die fettlöslichen Aromen durch das zugegebene Fett betont werden und durch die Geschmacksrezeptoren auf der Zunge intensiver wahrgenommen werden.

Mit Kaffee ist, sofern nicht anders bestimmt, im Rahmen dieser Anmeldung das durch Extraktion mit Wasser aus Kaffeebohnen hergestellte Getränk gemeint. Kaffee wird häufig aus der Extraktion von gerösteten und gemahlenen Kaffeebohnen mit heißem Wasser gewonnen und kann Koffein enthalten. Es sind auch Extraktionsverfahren für Kaffee mit kaltem Wasser bekannt.

Es können mehrere unterschiedliche Fette eingesetzt werden. Das mindestens eine zugegebene Fett kann teilweise oder vollständig von den Hülsenfrüchten aufgenommen werden oder diese ummanteln.

In einer bevorzugten Ausführungsform wird das mindestens eine Fett vor und/oder während des Erhitzens den Hülsenfrüchten zugesetzt. Es ist auch denkbar, dass mindestens ein erstes Fett vor dem Erhitzen zugegeben wird und während des Erhitzens dieses erste Fett erneut zugegeben wird oder ein oder mehrere andere Fette zugesetzt werden. In einer Ausführungsform wird das mindestens eine Fett kontinuierlich während des Erhitzens zugegeben.

Als Fett sollen hier nicht nur chemisch reine Triglyceride betrachtet werden, sondern auch Gemische, die überwiegend Triglyceride enthalten. Besonders natürlich gewonnene Fette, wie beispielsweise Sonnenblumenöl, enthalten eine Mischung verschiedener Triglyceride mit gleichen oder unterschiedlichen Fettsäureestern wie Oleinsäure und Linolsäure und in geringen Mengen weitere Bestandteile wie freie Fettsäuren. Für die vorliegende Erfindung sollen alle natürlichen und synthetischen Fette, inklusive der fetten Öle und gehärteten Fetten, unter dem Begriff Fett zusammengefasst werden. Die Fette können beispielsweise aus natürlichen Fettquellen wie Oliven, Sonnenblumenkernen, Kokos- oder Ölpalmen und ähnlichem gewonnen worden oder synthetisch erzeugt worden sein.

In einer bevorzugten Ausführungsform handelt es sich bei dem eingesetzten Fett um ein Speisefett. Ein Speisefett ist ein Fett oder eine Mischung mehrerer Fette, welche für die Ernährung von Menschen geeignet ist. Insbesondere ist darauf zu achten, dass bei der Röstung keine gesundheitsschädlichen, wie beispielsweise karzinogenen, Stoffe freigesetzt werden. Hierbei ist sowohl die Röstdauer als auch die Rösttemperatur zu berücksichtigen. Das eingesetzte Speisefett muss entsprechend hitzebeständig sein und darf keine schädlichen Abbaustoffe aufweisen, um die Produktsicherheit zu gewährleisten.

Das mindestens eine Fett kann mindestens eines aus Kokosfett, Palmfett, Sonnenblumenöl, gehärtetes Sonnenblumenöl, oder ein anderes Fett oder Öl mit einer Rauchtemperatur über 170 °C sein. Diese Fette sind unter anderem aufgrund ihrer hohen Hitzebeständigkeit besonders vorteilhaft und werden bereits in vielfältigen Prozessen der Lebensmittelherstellung eingesetzt. Neben einer guten Verarbeitbarkeit enthalten diese Fette keine oder wenig intensive negativ empfundene Geschmacksstoffe. Neben den genannten Fetten sind auch weitere Fette mit bevorzugt neutralen oder als positiv empfundenen Geschmacksstoffen denkbar.

Der Massenanteil zugegebenen Fetts nach DIN 1310 kann zwischen 0,5 und 20 % betragen. Dieser Fettgehalt, also Anteil an zugefügtem Fett, ist besonders vorteilhaft, weil er für einen später eventuell folgenden Mahlvorgang besonders geeignet ist. Der Fettgehalt kann beispielsweise zwischen 0,5 % und 10 %, weiter zwischen 2 % und 5 %, wie zwischen 3 % und 4 %, wie beispielsweise 3,5 % der Gesamtmasse ausmachen.

Der Fettgehalt kann unterschiedlich gewählt werden. Es ist denkbar, dass über den Fettgehalt der Anteil fettlöslicher Aromastoffe, die sich bei einer Extraktion mit Wasser lösen, beeinflusst wird. Der Fettgehalt nimmt wie zuvor beschrieben zumindest Einfluss auf den Geschmack des Hülsenfruchtextrakts. Darüber hinaus ist anzunehmen, dass das zugegebene Fett auch Einfluss auf die chemischen Reaktionen bei der Röstung nimmt, wie beispielsweise die unter anderem für Röstvorgänge bekannte Maillard-Reaktion oder das Karamellisieren. So ist der Einfluss von gesättigten und ungesättigten Fettsäuren auf die Maillard-Reaktion bekannt.

Der ursprüngliche Fettgehalt von Hülsenfrüchten ist bekanntermaßen geringer als der von beispielsweise Kaffeebohnen. Im Gegensatz zu beispielsweise Kaffeebohnen der Sorte Arabica mit einem Fettgehalt von 15-17 % und Kakaobohnen mit einem Fettgehalt von 50 bis 60 %, haben Lupinen einen Fettgehalt von 4 % bis 7 %, weiße Bohnen einen Fettgehalt von nur 0,7 %. Zur Röstung weißer Bohnen kann daher ein größerer Massenanteil Fett zugegeben werden als bei Lupinen.

Bei den verwendeten Hülsenfrüchten kann es sich beispielsweise um Kichererbsen, weiße Bohnen oder Kidneybohnen handeln. In einer bevorzugten Ausführungsform handelt es sich um Lupinen, insbesondere Süßlupinen. Süßlupinen sind für eine wohlschmeckende Aromenkomposition bekannt und enthalten weniger Bitterstoffe als beispielsweise Lupinen.

In einer Ausführungsform findet die Röstung bei Temperaturen unterhalb des Zersetzungspunkts des Fetts statt. Dies hat den Vorteil, dass der Fettgehalt der gerösteten Hülsenfrüchte gezielt eingestellt werden kann, ohne wertvolles eingesetztes Fett zu verlieren.

Die Röstung findet weiter bevorzugt bei Temperaturen unterhalb des Flammpunkts des verwendeten Fetts statt. Dadurch soll sichergestellt werden, dass keine unerwünschten Geschmacksstoffe oder gesundheitsschädliche Verbindungen bei der Röstung durch Abbauprodukte des Fetts entstehen. In einer bevorzugten Ausführungsform wird das Fett während des Röstverfahrens auf eine Temperatur unterhalb seines Rauchpunkts erhitzt.

Die Röstung kann beispielsweise bei Temperaturen zwischen 80 und 400°C durchgeführt werden, bevorzugt zwischen 160 und 250°C, z. B. zwischen 170 und 230 °C, noch bevorzugter zwischen 180 und 230°C, wie 150 und 250 °C, wie 190 und 210 °C.

Das Erhitzen (Rösten) der Hülsenfrüchte kann beispielsweise zwischen 15 und 45 Minuten andauern, bevorzugt zwischen 25 und 40 Minuten, noch bevorzugter zwischen 30 und 35 Minuten, beispielsweise 35 Minuten. Um eine milde Röstung der Hülsenfrüchte, wie der Lupinen, z. B. Süßlupinen zu erreichen, erfolgt die Röstung zwischen 15 und 25 Minuten, wie 20 Minuten. Eine kräftigere Röstung erreicht man durch Rösten für 25 bis 35 Minuten, wie 30 Minuten.

In einer bevorzugten Ausführungsform werden die Hülsenfrüchte in einem Trommelröstverfahren geröstet. Es ist denkbar, dass im Vergleich zu beispielsweise einer Heißluftröstung analog zur Röstung von Kaffee beim Trommelröstverfahren keine Gerbsäuren oder andere, den Geschmack beeinträchtigenden Verbindungen entstehen.

In einer Ausführungsform der erfindungsgemäßen Röstung ist dieses ein Röstverfahren für Süßlupinen, wobei das Fett vor der Röstung hinzugefügt wird. Das Fett beinhaltet oder umfasst Kokosfett und/oder Palmfett. Die Röstdauer beträgt zwischen 15 und 35 Minuten bei einer Rösttemperatur zwischen 170 und 250 °C, insbesondere zwischen 190 und 210 °C.

Neben dem Herstellungsverfahren werden geröstete Hülsenfrüchte beansprucht, die durch eines der zuvor beschriebenen Röstverfahren erhalten werden können. Die gerösteten Hülsenfrüchte zeichnen sich unter anderem dadurch aus, dass in ihnen Anteile des zugegebenen Fetts nachweisbar sind.

Weiter umfasst die Erfindung ein Verfahren zur Herstellung eines kaffeeähnlichen Getränks, welches zumindest teilweise ein Extrakt aus gerösteten Hülsenfrüchten enthält, wobei die Hülsenfrüchte durch ein zuvor beschriebenes Röstverfahren erhalten werden können.

Unter dem Ausdruck "kaffeeähnliches Getränk" wird vorliegend ein Getränk verstanden, hergestellt nach Art eines Kaffees, wobei Kaffee bzw. Kaffeebohnen einen Anteil von weniger als 50 %, wie weniger als 20 %, bezogen auf die Masse des verwendeten Mahlprodukts ausmacht. Insbesondere ist das kaffeeähnliche Getränk eines, das keine Kaffeebohnenprodukte enthält.

Hierzu werden erfindungsgemäß die gerösteten Hülsenfrüchte zunächst gemahlen. Je nach weiterer Anwendung wie beispielsweise die Extraktionsdauer oder Temperatur des Extraktionsmittels kann der Mahlgrad beliebig eingestellt werden. Der Mahlvorgang kann beispielsweise von Hand vorgenommen werden. Die Hülsenfrüchte können beispielsweise zerstoßen oder gemörsert werden. Das Mahlen der Hülsenfrüchte kann aber auch in einer Mühle erfolgen, die manuell oder durch einen Motor betrieben werden kann. Ein grober Mahlgrad ist für dunkle Röstungen, die beispielsweise durch hohe Temperaturen, geringen Fettgehalt und/oder eine lange Röstdauer erhalten werden kann, und/oder lange Extraktionszeiten geeignet. Ein feiner Mahlgrad wird vermehrt für kurze Extraktionsdauern eingesetzt. Beispielsweise können bei einer Extraktion mit heißem Wasser die Hülsenfrüchte feiner gemahlen werden als bei der tendenziell längeren Kaltextraktion mit kaltem oder zimmerwarmem Wasser. Zimmerwarmes Wasser hat eine Temperatur zwischen 17 °C und 25 °C.

Im zweiten Schritt findet die Extraktion der gemahlenen Hülsenfrüchte statt. Als Extraktionsmittel dient Wasser. Das Wasser kann unterschiedliche Temperaturen haben, beispielsweise kann das Wasser etwa zwischen 86 °C und 96 °C warm sein. Die Extraktion mit Wasser aus den Hülsenfrüchten kann auch mit kochendem Wasser durchgeführt werden. In einem anderen Beispiel kann die Extraktion mit einer Wassertemperatur zwischen 20 °C und 25 °C durchgeführt werden. Die Extraktion kann jedoch auch mit Eiswürfel erfolgen wie bei der Cold Drip Methode.

Weiter kann die Zurückhaltung der gemahlenen Hülsenfrüchte unterschieden werden. Beispielsweise können die gemahlenen Hülsenfrüchte durch einen Filter zurückgehalten werden. Das Wasser kann über längere Zeit mit den Hülsenfrüchten in Kontakt sein wie beispielsweise in einer French Press oder der Cold Brew Methode, oder nur für eine begrenzte Zeit wie beim Übergießen von gemahlenen Hülsenfrüchten in einem Filter.

Die Extraktionsdauer kann beispielsweise 10 Minuten betragen. Die Extraktionsdauer kann jedoch auch deutlich länger sein, beispielsweise 1 Stunde oder 3 Stunden. In einem Ausführungsbeispiel beträgt die Extraktionsdauer 8 Stunden.

Die Extraktion der gemahlenen, erfindungsgemäß gerösteten Hülsenfrüchte kann insbesondere auch in konventionellen Filterkaffeemaschinen durchgeführt werden. Die erfindungsgemäß gerösteten Hülsenfrüchte sind auch für Kaffeevollautomaten geeignet. Besonders vorteilhaft ist hierbei, wenn der Mahlgrad in dem Vollautomaten regulierbar ist. Darüber hinaus kann das Extrakt beispielsweise auch in einer Gegenstromanlage erhalten werden.

Durch Sprühtrocknung des Extrakts kann darüber hinaus ein Instantpulver des kaffeeähnlichen Getränks erhalten werden.

Nach der Extraktion können dem kaffeeähnlichen Getränk weitere Lebensmittel zugesetzt werden. Beispielsweise kann dem Extrakt koffeinfreie Lebensmittel wie Milch, aufgeschäumte Milch, Sahne, Zucker, Zimt, Kakao und/oder Kakaozubereitungen und/oder Kakaoverarbeitungen, koffeinfreier Tee, Honig, Sirup, Vanille-Extrakt, Aromen und/oder Marzipan zugesetzt werden. Dem Extrakt können zusätzlich oder stattdessen koffeinhaltige Lebensmittel, wie Kaffee oder Kaffeeextrakt, koffeinhaltigen Tee, und/oder alkoholische Getränke, wie Whiskey, Rum, Korn, Weinbrand, und/oder Eierlikör, und/oder Aromastoffe zugesetzt werden.

In einer Ausführungsform wird dem Extrakt aus erfindungsgemäß gerösteten Hülsenfrüchten Zucker und Vanille-Extrakt zugefügt.

Darüber hinaus wird ein kaffeeähnliches Getränk beansprucht, welches zumindest teilweise ein Extrakt aus erfindungsgemäß gerösteten Hülsenfrüchten enthält, die durch ein Röstverfahren nach einem hierin beschriebenen Verfahren erhalten werden können.

Das erfindungsgemäße kaffeeähnliche Getränk kann sowohl heiß als auch kalt verzehrt werden. Das kaffeeähnliche Getränk kann insbesondere auch in Form eines gekühlten Getränks nach Art eines Eiskaffees vorliegen.

In einer anderen Ausführungsform enthält das erfindungsgemäße kaffeeähnliche Getränk sowohl ein Extrakt aus erfindungsgemäß gerösteten Hülsenfrüchten als auch Milch. Das kaffeeähnliche Getränk kann auch zusätzlich oder stattdessen koffeinhaltige Lebensmittel, wie Kaffee oder Kaffeeextrakt, koffeinhaltigen Tee, und/oder alkoholische Getränke, wie Whiskey, Rum, Korn, Weinbrand, und/oder Eierlikör, enthalten.

Unter Milch wird Kuhmilch, Vollmilch, fettreduzierte Milch, laktosefreie Milch, verstanden. Die Milch kann beispielsweise frisch, pasteurisiert oder hocherhitzt sein. Unter den Begriff Milch sollen auch pflanzliche Milchalternativen aus beispielsweise Hafer, Mandeln oder Soja gefasst werden.

### Ausführungsbeispiele

In einem Ausführungsbeispiel werden Süßlupinen vor der Röstung mit Kokosfett vermengt, wobei der Fettanteil des zugefügten Fetts 3,5 % bezogen auf die Gesamtmasse beträgt. Die Röstung findet bei 195 °C in einem Trommelröstverfahren für 35 Minuten statt.

Es zeigt sich, dass die erfindungsgemäß gerösteten Süßlupinen niedrigere Acrylamidwerte aufweisen.

In einem weiteren Ausführungsbeispiel wird ein kaffeeähnliches Getränk hergestellt, indem geröstete Süßlupinen grob gemahlen und in einer handelsüblichen Filtermaschine aufgebrüht und gefiltert werden. Auch alle weiteren Methoden, die zur Herstellung von Bohnenkaffee verwendet werden, können genutzt werden.

Ein nach diesem Herstellungsverfahren erhaltenes erfindungsgemäßes kaffeeähnliches Getränk wurde von einer Gruppe Testpersonen als wohlschmeckender bewertet, als ein kaffeeähnliches Getränk mit identischem Mahl- und Extraktionsvorgang aus gerösteten Süßlupinen, denen kein Fett zugesetzt wurde.

Dieses gilt für das erfindungsgemäße kaffeeähnliche Getränk, welches ein Extrakt aus nach einem hier beschriebenen Verfahren gerösteten Hülsenfrüchten ohne Zusatz weiterer Bestandteile als auch für kaffeeähnliche Getränke mit Milch und/oder Zucker als Zusatz enthält.

In einem weiteren Ausführungsbeispiel wird die Extraktion mit Wasser bei 80 °C durchgeführt.

In einem weiteren Ausführungsbeispiel wird das Extrakt aus den gerösteten Hülsenfrüchten unter Zugabe von beispielsweise Zucker oder zuckerhaltigen Lebensmitteln zu einem Sirup eingekocht.

## Patentansprüche

1. Röstverfahren für Hülsenfrüchte, **gekennzeichnet durch** die Schritte
- Erhitzen der Hülsenfrüchte zum Rösten dieser;
- Zugabe von mindestens einem Fett zu den Hülsenfrüchten.

2. Röstverfahren nach Anspruch 1, **dadurch gekennzeichnet, dass** die Zugabe des mindestens einen Fetts vor und/oder während des Erhitzens geschieht.

3. Röstverfahren nach einem der vorhergehenden Ansprüche, **dadurch gekennzeichnet, dass** es sich bei den Hülsenfrüchten um Lupinen, insbesondere Süßlupinen, handelt.

4. Röstverfahren nach einem der vorhergehenden Ansprüche, **dadurch gekennzeichnet, dass** das mindestens eine zugesetzte Fett ein Speisefett ist.

5. Röstverfahren nach einem der vorhergehenden Ansprüche, **dadurch gekennzeichnet, dass** das zugesetzte Fett mindestens eines aus Kokosfett, Palmfett, Sonnenblumenöl, gehärtetes Sonnenblumenöl, oder ein anderes Öl oder Fett mit einer Rauchtemperatur über 170 °C ist.

6. Röstverfahren nach einem der vorhergehenden Ansprüche, **dadurch gekennzeichnet, dass** der Massenanteil des zugegebenen Fetts zwischen 0,5 und 20 %, bevorzugt zwischen 0,5 % und 10 % der Gesamtmasse ausmacht.

7. Röstverfahren nach einem der vorhergehenden Ansprüche, **dadurch gekennzeichnet, dass** die Temperatur beim Erhitzen geringer als die Zersetzungstemperatur des verwendeten Fetts ist.

8. Röstverfahren nach einem der vorhergehenden Ansprüche, **dadurch gekennzeichnet, dass** die Temperatur beim Erhitzen geringer als 400°C ist.

9. Röstverfahren nach einem der vorherigen Ansprüche, **dadurch gekennzeichnet, dass** die Rösttemperatur bei 150 °C bis 250 °C, wie 170 °C bis 230 °C liegt.

10. Röstverfahren nach einem der vorherigen Ansprüche, wobei die Dauer der Röstung zwischen 15 und 45 Minuten, wie 15 und 35 Minuten, wie zwischen 20 und 30 Minuten in Abhängigkeit vom gewünschten Röstgrad liegt.

11. Röstverfahren nach einem der vorherigen Ansprüche, wobei es ein Röstverfahren zur Röstung von Süßlupinen ist, das Fett vor dem Rösten hinzugefügt wird und es ein Kokos- oder Palmfett ist, die Röstdauer zwischen 15 und 35 Minuten liegt, und die Rösttemperatur zwischen 170 und 230 °C, insbesondere zwischen 190 °C und 210 °C liegt.

12. Röstverfahren nach einem der vorhergehenden Ansprüche, **dadurch gekennzeichnet, dass** es sich um ein Trommelröstverfahren handelt.

13. Geröstete Hülsenfrüchte, erhältlich nach einem Röstverfahren der vorherigen Ansprüche.

14. Herstellung eines kaffeeähnlichen Getränks, zumindest teilweise enthaltend ein Extrakt aus gerösteten Hülsenfrüchten nach Anspruch 13, **gekennzeichnet durch** die Schritte
a) Mahlen der Hülsenfrüchte;
b) Extraktion mit Wasser der gemahlenen Hülsenfrüchte.

15. Kaffeeähnliches Getränk, zumindest teilweise enthaltend ein Extrakt aus gerösteten Hülsenfrüchten nach Anspruch 13.
